# EUROPEAN PATENT APPLICATION

(11) **EP 4 752 826 A1**
(43) Date of publication of application: **03.06.2026**
(21) Application number: 25219577.1
(22) Date of filing: 28.11.2025
(51) Int. Cl.: G06T 5/50, G06T 5/60, G06T 5/77

(54) **VIDEO PROCESSING METHOD, DEVICE, STORAGE MEDIUM, AND PROGRAM PRODUCT**

(30) Priority: 29.11.2024 CN 202411749904
(71) Applicant: Beijing Zitiao Network Technology Co., Ltd., Beijing 100190 (CN)
(72) Inventor: WU, Fangfang, Beijing, 100028 (CN)
(74) Representative: Marks & Clerk LLP

(57) **Abstract**

Embodiments of the present disclosure provide a video processing method, device, storage medium, and program product. The method includes: acquiring (S201) optical flow information of a to-be-processed video; acquiring a first intermediate video frame with a target object removed and an initial mask image for any initial video frame of the to-be-processed video; determining (S203) a pixel value of at least one target pixel in a to-be-repaired area of the first intermediate video frame according to the optical flow information and adjacent video frames of the initial video frame, and filling the target pixel of the first intermediate video frame and a corresponding pixel of the initial mask image respectively to obtain a second intermediate video frame and an intermediate mask image; and invoking (S204) a preset video repair model to repair the second intermediate video frame according to the optical flow information, the second intermediate video frame, and the intermediate mask image. Preliminary repair is performed by combining the optical flow information and the adjacent video frames, so as to preserve richer original textures, reduce the area of the area to be repaired, and then repair by using the video repair model, thus improving the repair efficiency and the erasing quality of the target object.

## Description

### TECHNICAL FIELD

Embodiments of the present disclosure relate to the field of computer and network communication technologies, and in particular, to a video processing method, device, storage medium, and program product.

### BACKGROUND

In the process of video editing and processing, users need to erase subtitles, advertisements, people, icons and other content in the video.

However, some video processing methods in the prior art are low in erasing quality, especially in some complex scenes, where situations of missing erasing, smearing, blurring and the like easily occur, and manual repair frame by frame is required, which is costly, or the video is directly screened without manual repair, which affects the user's viewing experience.

### SUMMARY

Embodiments of the present disclosure provide a video processing method, device, storage medium, and program product to improve the erasing quality of a target object in a video.

In a first aspect, an embodiment of the present disclosure provides a video processing method, including:
acquiring optical flow information of a to-be-processed video;
determining a position of a target object in any initial video frame of the to-be-processed video, and performing target object segmentation on the initial video frame according to the position of the target object to obtain a first intermediate video frame with the target object removed and an initial mask image; where in the initial mask image, the target object is in a non-mask area, and the non-mask area is used to identify a to-be-repaired area of the first intermediate video frame;
determining a pixel value of at least one target pixel in the to-be-repaired area of the first intermediate video frame according to the optical flow information and adjacent video frames of the initial video frame, and filling the target pixel of the first intermediate video frame and a corresponding pixel of the initial mask image respectively according to the pixel value of the target pixel to obtain a second intermediate video frame and an intermediate mask image; and
invoking a preset video repair model to repair the second intermediate video frame according to the optical flow information, the second intermediate video frame, and the intermediate mask image to obtain a target video frame.

In a second aspect, an embodiment of the present disclosure provides a video processing device, including:
an optical flow acquiring unit, configured to acquire optical flow information of a to-be-processed video;
a target object identifying unit, configured to determine a position of a target object in any initial video frame of the to-be-processed video, and perform target object segmentation on the initial video frame according to the position of the target object to obtain a first intermediate video frame with the target object removed and an initial mask image; where in the initial mask image, the target object is in a non-mask area, and the non-mask area is used to identify a to-be-repaired area of the first intermediate video frame;
a first repairing unit, configured to determine a pixel value of at least one target pixel in the to-be-repaired area of the first intermediate video frame according to the optical flow information and adjacent video frames of the initial video frame, and fill the target pixel of the first intermediate video frame and a corresponding pixel of the initial mask image respectively according to the pixel value of the target pixel to obtain a second intermediate video frame and an intermediate mask image; and
a second repairing unit, configured to invoke a preset video repair model to repair the second intermediate video frame according to the optical flow information, the second intermediate video frame, and the intermediate mask image to obtain a target video frame.

In a third aspect, an embodiment of the present disclosure provides an electronic device, including: a processor and a memory;
the memory stores computer-executable instructions; and
the processor executes the computer-executable instructions stored in the memory to enable the at least one processor to execute the video processing method according to the above first aspect and various possible designs of the first aspect.

In a fourth aspect, an embodiment of the present disclosure provides a computer-readable storage medium, where computer-executable instructions are stored in the computer-readable storage medium, and the computer-executable instructions, when executed by a processor, implement the video processing method according to the above first aspect and various possible designs of the first aspect.

In a fifth aspect, an embodiment of the present disclosure provides a computer program product, including a computer program, and the computer program, when executed by a processor, implements the video processing method according to the above first aspect and various possible designs of the first aspect.

The video processing method, the device, the storage medium, and the program product provided by embodiments of the present disclosure include: acquiring optical flow information of a to-be-processed video; determining a position of a target object in any initial video frame of the to-be-processed video, and performing target object segmentation on the initial video frame according to the position of the target object to obtain a first intermediate video frame with the target object removed and an initial mask image; where in the initial mask image, the target object is in a non-mask area, and the non-mask area is used to identify a to-be-repaired area of the first intermediate video frame; determining a pixel value of at least one target pixel in the to-be-repaired area of the first intermediate video frame according to the optical flow information and adjacent video frames of the initial video frame, and filling the target pixel of the first intermediate video frame and a corresponding pixel of the initial mask image respectively according to the pixel value of the target pixel to obtain a second intermediate video frame and an intermediate mask image; and invoking a preset video repair model to repair the second intermediate video frame according to the optical flow information, the second intermediate video frame, and the intermediate mask image to obtain a target video frame. In the embodiments of the present disclosure, preliminary repair may be performed by combining the optical flow information and the adjacent video frames, richer original textures may be preserved, the area of the to-be-repaired area may also be reduced, and then the video repair model may be used for repair, thus improving the repair efficiency and the erasing quality of the target object.

### BRIEF DESCRIPTION OF THE DRAWINGS

In order to more clearly explain the technical solutions in the embodiments of the present disclosure or in the prior art, the following will briefly introduce the drawings that need to be used in the description of the embodiments or the prior art. Obviously, the drawings in the following description are some embodiments of the present disclosure. For those of ordinary skill in the art, other drawings may be obtained according to these drawings without paying creative labor.
Fig. 1 is a schematic diagram of a scenario of a video processing method provided by an embodiment of the present disclosure;
Fig. 2 is a schematic flowchart of a video processing method provided by an embodiment of the present disclosure;
Fig. 3 is a schematic flowchart of a video processing method provided by another embodiment of the present disclosure;
Fig. 4 is a schematic flowchart of a video processing method provided by another embodiment of the present disclosure;
Fig. 5 is a schematic flowchart of a video processing method provided by another embodiment of the present disclosure;
Fig. 6 is a structural block diagram of a video processing device provided by an embodiment of the present disclosure; and
Fig. 7 is a schematic hardware structural diagram of a video processing device provided by an embodiment of the present disclosure.

### DETAILED DESCRIPTION OF EMBODIMENTS

In order to make the purpose, technical solutions and advantages of the embodiments of the present disclosure clearer, the technical solutions in the embodiments of the present disclosure will be clearly and completely described below in combination with the drawings in the embodiments of the present disclosure. Obviously, the described embodiments are part of the embodiments of the present disclosure, but not all of the embodiments. Based on the embodiments in the present disclosure, all other embodiments obtained by persons of ordinary skill in the art without creative efforts fall within the protection scope of the present disclosure.

In the process of video editing and processing, users have the need to erase the content such as subtitles, advertisements, people, icons, etc. in the video. However, some video processing methods in the prior art have low erasing quality, especially in some complex scenes, which are prone to situations such as missing erasing, smearing, blurring, etc., and require manual repair frame by frame, which is costly, or the video is directly screened without manual repair, which will affect the user's viewing experience.

In order to solve the above technical problems, an embodiment of the present disclosure provides a video processing method, including: acquiring optical flow information of a to-be-processed video; determining a position of a target object in any initial video frame of the to-be-processed video, and performing target object segmentation on the initial video frame according to the position of the target object to obtain a first intermediate video frame with the target object removed and an initial mask image; where in the initial mask image, the target object is in a non-mask area, and the non-mask area is used to identify a to-be-repaired area of the first intermediate video frame; determining a pixel value of at least one target pixel in the to-be-repaired area of the first intermediate video frame according to the optical flow information and adjacent video frames of the initial video frame, and filling the target pixel of the first intermediate video frame and a corresponding pixel of the initial mask image respectively according to the pixel value of the target pixel to obtain a second intermediate video frame and an intermediate mask image; and invoking a preset video repair model to repair the second intermediate video frame according to the optical flow information, the second intermediate video frame, and the intermediate mask image to obtain a target video frame. In the present embodiment, preliminary repair may be performed by combining optical flow information and adjacent video frames, richer original textures may be preserved, the area of the area that needs to be repaired may also be reduced, and then a video repair model may be used for repair, thus improving the repair efficiency and the erasing quality of the target object.

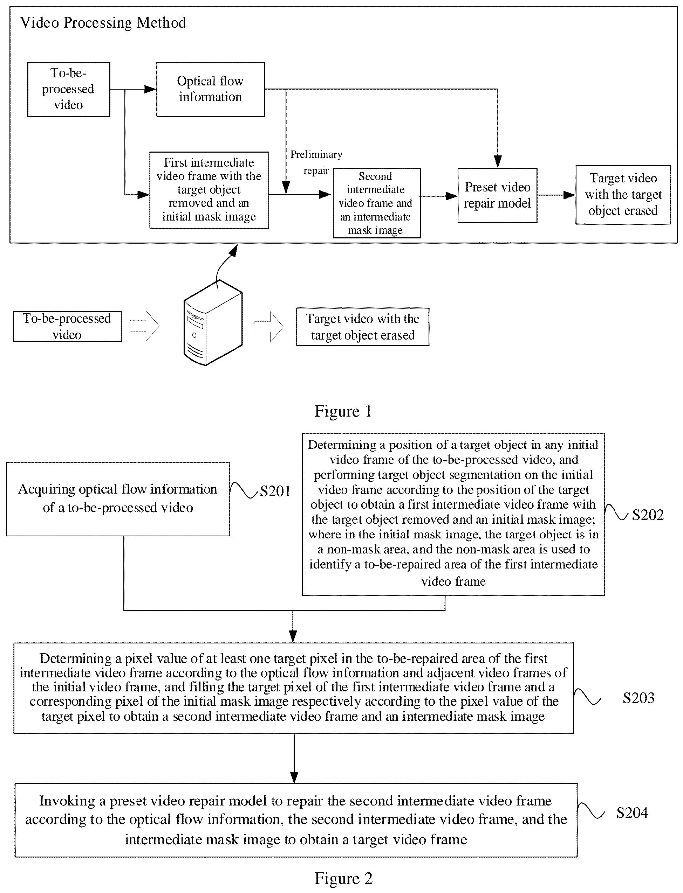

An application scenario of the video processing method of the embodiment of the present disclosure is shown in Fig. 1, and the method of the present embodiment may be applied to an electronic device such as a terminal device or a server. The optical flow information of the to-be-processed video is acquired; the position of the target object in any initial video frame of the to-be-processed video is determined, and target object segmentation is performed on the initial video frame according to the position of the target object to obtain the first intermediate video frame with the target object removed and the initial mask image; where in the initial mask image, the target object is in the non-mask area, and the non-mask area is used to identify the to-be-repaired area of the first intermediate video frame; the pixel value of at least one target pixel in the to-be-repaired area of the first intermediate video frame is determined according to the optical flow information and the adjacent video frames of the initial video frame, and the target pixel of the first intermediate video frame and the corresponding pixel of the initial mask image are filled respectively according to the pixel value of the target pixel to obtain the second intermediate video frame and the intermediate mask image; and the preset video repair model is invoked to repair the second intermediate video frame according to the optical flow information, the second intermediate video frame, and the intermediate mask image to obtain the target video frame, and finally the target video with the target object erased is output.

The video processing method of the present disclosure will be described in detail below in combination with specific embodiments.

Referring to Fig. 2, Fig. 2 is a schematic flowchart of a video processing method provided by an embodiment of the present disclosure. The method of the present embodiment may be applied to an electronic device such as a terminal device or a server. The video processing method includes the following.

S201, acquiring optical flow information of a to-be-processed video.

In the present embodiment, in order to accurately erase the target object in the to-be-processed video, considering that a part of area occluded by the target object in any video frame may not be occluded in adjacent video frames, the original texture in the adjacent video frames may be used to fill in the part of area occluded by the target object in the current video frame. However, since an object in the video may move, the part of area occluded by the target object in the current video frame may not be in the same position in the adjacent video frames, therefore, it is also necessary to determine corresponding positions of the part of area occluded by the target object in the current video frame in the adjacent video frames. Considering that an optical flow is a two-dimensional vector field that describes a motion trajectory and a speed of a pixel point with time in a continuous frame image, and is used to capture motion of an object and displacement information between adjacent frames, in the present embodiment, the optical flow information may be used to determine the corresponding positions of the part of the area occluded by the target object in the current video frame in the adjacent video frames. In the present embodiment, the optical flow information may be acquired for the to-be-processed video, where any known method may be used to acquire the optical flow information, such as a sparse optical flow algorithm, a dense optical flow algorithm, a deep learning-based optical flow algorithm, etc.

Optionally, in the present embodiment, a preset optical flow model may be used to acquire the optical flow information for the to-be-processed video, where the preset optical flow model may be any known optical flow algorithm model.

Further, considering that the acquired optical flow information may be inaccurate or missing, therefore, optical flow completion (or flow completion) may be performed on initial optical flow information on the basis of the acquired initial optical flow information, where any known method may be used for the optical flow completion, for example, an optical flow completion method based on a forward flow, a reverse flow and non-adjacent frames, or a deep learning-based optical flow completion method, etc.

Optionally, in the present embodiment, a preset optical flow completion model may be invoked to complete the initial optical flow information according to the to-be-processed video and the initial optical flow information to obtain the final optical flow information, where the preset optical flow completion model may be any known optical flow completion model.

S202, determining a position of a target object in any initial video frame of the to-be-processed video, and performing target object segmentation on the initial video frame according to the position of the target object to obtain a first intermediate video frame with the target object removed and an initial mask image; where in the initial mask image, the target object is in a non-mask area, and the non-mask area is used to identify a to-be-repaired area of the first intermediate video frame.

In the present embodiment, in order to accurately erase the target object in the to-be-processed video, it is also necessary to determine a position of the target object in each initial video frame of the to-be-processed video, any identification method may be used to identify the target object from the initial video frame to determine the position of the target object. Optionally, a recognition model may be used to identify the target object from the initial video frame, and the recognition model may be any machine learning model.

Further, target object segmentation may be performed on the initial video frame according to the position of the target object, and the target object may be taken out from the initial video frame to obtain a video frame with the target object removed, which is recorded as the first intermediate video frame here. In addition, a mask image of the target object may also be acquired, which is recorded as the initial mask image. The mask image is a binary image with the same size as the original image, where a selected area (non-mask area or unoccluded area) is marked as 1 (or True), and the remaining area (mask area or occluded area) is marked as 0 (or False), which is used to indicate a specific area to be processed when some image processing operations are applied. In the present embodiment, the area of the target object is in the non-mask area (selected area or unoccluded area) in the initial mask image, which indicates that the area is the to-be-repaired area, that is, the non-target object area in the initial mask image is occluded without repair, while the target object area needs to be repaired and is not occluded.

Optionally, when determining the position of the target object in any initial video frame, the position of the target object to be erased may also be determined according to user needs, and the user may preset a preset selection condition for the target object, such as a type, a color, a position, etc. of the target object, that is, only the target object that meets the preset selection condition needs to be erased. Therefore, when determining the position of the target object in any initial video frame, all target objects in any initial video frame of the to-be-processed video may be identified first, and then selecting is performed based on the preset selection condition, the target object that meets the preset selection condition may be selected from all target objects in the initial video frame, and the position of the target object that meets the preset selection condition may be determined. By executing subsequent steps based on the position of the target object, only the target object that meets the preset selection condition may be erased.

It should be noted that in the present embodiment, the execution sequence of S201 and S202 is not limited, and certainly, they may also be executed in parallel.

S203, determining a pixel value of at least one target pixel in the to-be-repaired area of the first intermediate video frame according to the optical flow information and adjacent video frames of the initial video frame, and filling the target pixel of the first intermediate video frame and a corresponding pixel of the initial mask image respectively according to the pixel value of the target pixel to obtain a second intermediate video frame and an intermediate mask image.

In the present embodiment, corresponding pixels of the at least one target pixel in the to-be-repaired area of the first intermediate video frame in the adjacent video frames may be determined according to the optical flow information and the adjacent video frames of the initial video frame, and then the pixel value of the target pixel may be determined based on the corresponding pixels in the adjacent video frames. The target pixel of the first intermediate video frame is filled according to the pixel value of the target pixel to obtain the second intermediate video frame, and the corresponding pixel of the initial mask image is filled (the non-mask area is changed to the mask area, in other words, the corresponding pixel is changed from 1 to 0), which represents that the position of the corresponding pixel of the initial mask image has been repaired and no further repair is required, and the intermediate mask image is obtained.

During specific implementation, the pixel value of the target pixel may be filled into the target pixel of the first intermediate video frame to obtain the second intermediate video frame. In addition, the corresponding pixel of the target pixel in the corresponding initial mask image is determined, and the corresponding pixel in the initial mask image is masked to change the non-mask area to the mask area, and finally the intermediate mask image is obtained.

Optionally, in the present embodiment, when determining the pixel value of the at least one target pixel in the to-be-repaired area of the first intermediate video frame, the corresponding pixels of the at least one target pixel in the to-be-repaired area of the first intermediate video frame in the adjacent video frames may be determined according to the optical flow information, and then the pixel value of the target pixel may be determined according to the corresponding pixels in the adjacent video frames, so that the original texture of the target pixel may be preserved as much as possible based on the corresponding pixels in the adjacent video frames.

For a pixel in the to-be-repaired area for which no corresponding pixels in the adjacent video frames are found, no operation is required in this step.

Certainly, any other feasible method may be used for the above method of determining the pixel value of the target pixel, for example, any feasible algorithm or machine learning model may be used.

S204, invoking a preset video repair model to repair the second intermediate video frame according to the optical flow information, the second intermediate video frame, and the intermediate mask image to obtain a target video frame.

In the present embodiment, the second intermediate video frame has been preliminarily repaired once, but not all the pixels in the to-be-repaired area may have been repaired. Therefore, the preset video repair model may be invoked to further repair the second intermediate video frame according to the optical flow information, the second intermediate video frame, and the intermediate mask image, so that the second intermediate video frame may be completely repaired, and finally the target video frame may be obtained, and then the final target video may be output. The preset video repair model may be any machine learning model, such as a Transformer model, etc., which is pre-trained to have the ability to perform video repair based on optical flow information, video frames and mask images.

It should be noted that in the present embodiment, the target object may be any object that needs to be erased in the to-be-processed video, such as subtitles, advertisement labels, people, icons, etc. For the subtitles, text-class advertisements and the like, since they are generally relatively small and have complex strokes, the shape of the occluded area is also relatively complex, accurate erasing is required, and the above video processing method may be adopted. For other target objects that do not require accurate erasing, although the above video processing method may also be used for processing, the cost is relatively high, therefore, other erasing methods may also be used, for example, the above preset video repair model may be invoked for repair only based on the optical flow information and the first intermediate video frame, or other video repair models may be invoked.

Optionally, in the present embodiment, the video processing method of the present embodiment may be executed for all video frames of the to-be-processed video, or the video processing method of the present embodiment may be executed by decimating frames of the to-be-processed video.

Further, after the erasing of the target object is completed, other video editing operations may be performed, such as adding new subtitles (such as subtitles of different colors and different languages), adding new advertisements, icons, etc.

The video processing method provided by the present embodiment includes: acquiring optical flow information of a to-be-processed video; determining a position of a target object in any initial video frame of the to-be-processed video, and performing target object segmentation on the initial video frame according to the position of the target object to obtain a first intermediate video frame with the target object removed and an initial mask image; where in the initial mask image, the target object is in a non-mask area, and the non-mask area is used to identify a to-be-repaired area of the first intermediate video frame; determining a pixel value of at least one target pixel in the to-be-repaired area of the first intermediate video frame according to the optical flow information and adjacent video frames of the initial video frame, and filling the target pixel of the first intermediate video frame and a corresponding pixel of the initial mask image respectively according to the pixel value of the target pixel to obtain a second intermediate video frame and an intermediate mask image; and invoking a preset video repair model to repair the second intermediate video frame according to the optical flow information, the second intermediate video frame, and the intermediate mask image to obtain a target video frame. In the present embodiment, preliminary repair may be performed by combining optical flow information and adjacent video frames, richer original textures may be preserved, the area of the area that needs to be repaired may also be reduced, and then a video repair model may be used for repair, thus improving the repair efficiency and the erasing quality of the target object.

In any of the above embodiments, when determining the pixel value of the target pixel according to the corresponding pixels in the adjacent video frames, specifically, one of the following manners may be adopted.

Manner 1: determining a pixel value with a largest number of occurrences among pixel values of the corresponding pixels in the adjacent video frames, and determining the pixel value with the largest number of occurrences as the pixel value of the target pixel.

In the present embodiment, since there may be multiple adjacent video frames, such as several previous and next frames, the pixel value of the corresponding pixel of the target pixel in each adjacent video frame may be completely the same or may have certain differences. In the present embodiment, the pixel value with the largest number of occurrences may be determined from the pixel values of the corresponding pixels in the adjacent video frames, and the pixel value with the largest number of occurrences has higher accuracy, therefore, the pixel value with the largest number of occurrences may be determined as the pixel value of the target pixel.

Manner 2: performing weighted averaging on the pixel values of the corresponding pixels in the adjacent video frames, and determining a weighted average result as the pixel value of the target pixel.

In the present embodiment, weighted averaging may also be performed on the pixel values of the corresponding pixels in the adjacent video frames, the pixel values of the corresponding pixels in the multiple adjacent video frames may be considered comprehensively, and the weighted average result may be determined as the pixel value of the target pixel. The weight of the weighted average may be set according to the actual situation, or may be determined by pre-training.

Certainly, the pixel value of the target pixel may also be determined according to the corresponding pixels in the adjacent video frames in other ways, which will not be repeated here.

On the basis of any of the above embodiments, since the pixel value of the target pixel is inferred, it may not be accurate. Therefore, before filling the target pixel of the first intermediate video frame and the corresponding pixel of the initial mask image according to the pixel value of the target pixel, the confidence of the pixel value of the target pixel may also be considered, and only when the confidence is relatively high, for example, higher than a preset confidence threshold, the target pixel of the first intermediate video frame and the corresponding pixel of the initial mask image are filled according to the pixel value of the target pixel, otherwise, if the confidence is not high, the pixel value of the target pixel is ignored.

The confidence of the pixel value of the target pixel may be determined in any feasible way, for example, by a pre-trained machine learning model, the to-be-processed video, the position of the target pixel and the pixel value may be input into the model, and the confidence of the pixel value of the target pixel is output. The specific model is not limited in the present embodiment.

On the basis of any of the above embodiments, S204 invoking a preset video repair model to repair the second intermediate video frame according to the optical flow information, the second intermediate video frame, and the intermediate mask image to obtain a target video frame may specifically include:
invoking the preset video repair model to repair a to-be-repaired area of the second intermediate video frame according to the optical flow information, the second intermediate video frame, and the intermediate mask image to obtain the target video frame, where the to-be-repaired area of the second intermediate video frame is an area corresponding to a non-mask area of the intermediate mask image in the second intermediate video frame.

In the present embodiment, in order to reduce the calculation amount of the preset video repair model and improve the repair efficiency, the preset video repair model may only repair the to-be-repaired area of the second intermediate video frame, and the to-be-repaired area of the second intermediate video frame is an area corresponding to the non-mask area of the intermediate mask image in the second intermediate video frame, that is, a remaining non-mask area after the pixels filled by the initial repair are removed from the non-mask area of the initial mask image, which greatly reduces the area of the area that needs to be repaired, thus reducing the calculation amount of the preset video repair model.

On the basis of any of the above embodiments, when repairing the to-be-repaired area of the current second intermediate video frame, feature extraction may be performed in a certain spatio-temporal range, local features may be extracted in combination with images of a same window area of adjacent second intermediate video frames, and global features may also be extracted in combination with the overall image of the current second intermediate video frame, so as to improve the accuracy and integrity of the features, and then the to-be-repaired area of the current second intermediate video frame may be repaired based on the features.

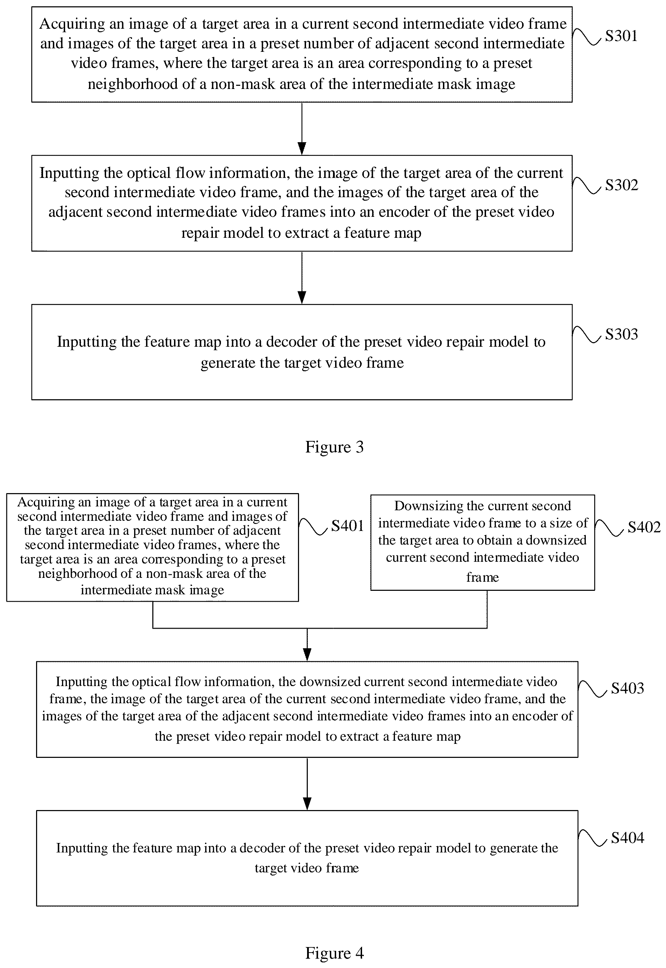

In an optional embodiment, the preset video repair model is a Transformer model, and the Transformer model is a neural network model based on a self-attention mechanism. In the present embodiment, the self-attention mechanism may be used to simultaneously process images of target areas of multiple second intermediate video frames, so as to better perform spatio-temporal prediction learning, capture long-distance dependencies, and repair the to-be-repaired area of the current second intermediate video frame, and certainly, other models may also be used. The preset video repair model includes an encoder (Encoder) and a decoder (Decoder), where the encoder is used to extract features and the decoder is used to generate the target video frame. The Transformer model is used as an example below, and the processing process of other models may be adjusted adaptively according to the specific model. Specifically, as shown in Fig. 3, the invoking the preset video repair model to repair the to-be-repaired area of the second intermediate video frame according to the optical flow information, the second intermediate video frame, and the intermediate mask image to obtain the target video frame includes:
S301, acquiring an image of a target area in a current second intermediate video frame and images of the target area in a preset number of adjacent second intermediate video frames, where the target area is an area corresponding to a preset neighborhood of a non-mask area of the intermediate mask image;
S302, inputting the optical flow information, the image of the target area of the current second intermediate video frame, and the images of the target area of the adjacent second intermediate video frames into an encoder of the preset video repair model to extract a feature map; and
S303, inputting the feature map into a decoder of the preset video repair model to generate the target video frame.

In the present embodiment, in order to improve the processing efficiency of the Transformer model and reduce the data volume, in the present embodiment, it is possible to only focus on an image of a neighborhood range (a preset range around the to-be-repaired area) of the to-be-repaired area in the second intermediate video frame, that is, an image of an area corresponding to a preset neighborhood of the non-mask area of the intermediate mask image in the second intermediate video frame, and there is no need to use the entire second intermediate video frame as the input of the Transformer model. At the same time, it is necessary to refer to images of a same area in adjacent second intermediate video frames to form a group of sequence images, and then input the optical flow information, the image of the target area of the current second intermediate video frame, and the images of the target area of the adjacent second intermediate video frames into the encoder (Encoder) of the Transformer model to extract the feature map. The encoder (Encoder) of the Transformer model is used to perform feature extraction on the input data and output the feature map (vector), which contains the dependencies and contextual information of the input sequence, etc., and may specifically include a multi-head self-attention (Multi-Head Self-Attention) layer, which is used to capture the global dependencies between image blocks, a feed-forward network (Feed-Forward Network), which is used to further perform non-linear transformation on the features of each image block to enhance the expressive ability of the model, and a residual connection and layer normalization (Add & Norm) layer, which is used to alleviate the gradient disappearance problem through the residual connection and make the input distribution of each layer more stable through the layer normalization, and the like, and the specific processing process thereof will not be repeated here.

More specifically, before being input to the encoder of the Transformer model, Embedding (embedding) processing may be performed on the optical flow information, the image of the target area of the current second intermediate video frame, and the images of the target area of the adjacent second intermediate video frames to generate corresponding vector representations, and then the corresponding vector representations are input to the encoder of the Transformer model.

Further, the feature map output from the encoder is input to the decoder (Decoder) of the Transformer model for prediction, so as to generate the repaired target video frame. The decoder (Decoder) of the Transformer model is used to perform prediction according to the output sequence of the encoder and generate a sequence, which may specifically include a masked multi-head self-attention (Masked Multi-Head Self-Attention) layer, which is used to calculate an attention score between each token and other tokens in the target sequence, a multi-head self-attention (Multi-Head Self-Attention) layer, which is used to align the current state of the decoder with the output of the encoder, allowing the decoder to refer to the information of the input sequence when generating the target sequence, a feed-forward neural network (Feed-Forward Network), which is used to further process the output of the attention layer through a series of non-linear transformations, and a residual connection and layer normalization (Add & Norm) layer, which is used to alleviate the gradient disappearance problem through the residual connection and make the input distribution of each layer more stable through the layer normalization, and the like, and the specific processing process thereof will not be repeated here.

In the present embodiment, only the optical flow information, the image of the target area of the current second intermediate video frame and the images of the target area of the adjacent second intermediate video frames are used as input, and global features are not considered. In the case of considering the global features, it may be divided into the following two cases. One case is to downsize the current second intermediate video frame to the size of the target area, which is also used as the input of the encoder to implement image-level fusion. Another case is to separately extract features from the current second intermediate video frame to obtain a global feature map, which is fused with the feature map output from the encoder at a feature level. The details are described below.

In an optional embodiment, as shown in Fig. 4, the invoking the preset video repair model to repair the to-be-repaired area of the second intermediate video frame according to the optical flow information, the second intermediate video frame, and the intermediate mask image to obtain the target video frame includes:
S401, acquiring an image of a target area in a current second intermediate video frame and images of the target area in a preset number of adjacent second intermediate video frames, where the target area is an area corresponding to a preset neighborhood of a non-mask area of the intermediate mask image;
S402, downsizing the current second intermediate video frame to a size of the target area to obtain a downsized current second intermediate video frame;
S403, inputting the optical flow information, the downsized current second intermediate video frame, the image of the target area of the current second intermediate video frame, and the images of the target area of the adjacent second intermediate video frames into an encoder of the preset video repair model to extract a feature map; and
S404, inputting the feature map into a decoder of the preset video repair model to generate the target video frame.

In the present embodiment, the acquisition of the image of the target area in the current second intermediate video frame and the images of the target area in the preset number of adjacent second intermediate video frames is the same as S301 in the above embodiment. In addition, the current second intermediate video frame is resized to the size of the target area, and then the optical flow information, the downsized current second intermediate video frame, the image of the target area of the current second intermediate video frame, and the images of the target area of the adjacent second intermediate video frames are input into the encoder of the Transformer model to extract the feature map, and the obtained feature map is a feature map fused with global features. Then, the feature map is input into the decoder of the Transformer model to generate the repaired target video frame, which is the same as S303 in the above embodiment.

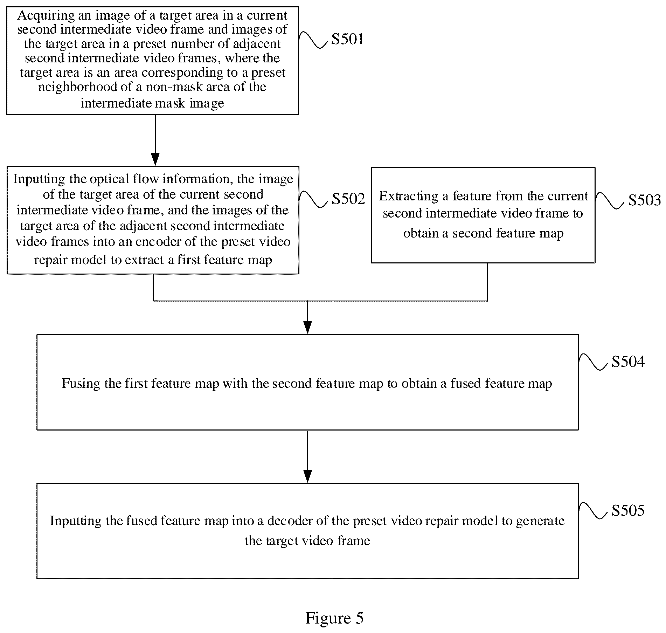

In another optional embodiment, as shown in Fig. 5, the invoking the preset video repair model to repair the to-be-repaired area of the second intermediate video frame according to the optical flow information, the second intermediate video frame, and the intermediate mask image to obtain the target video frame includes:
S501, acquiring an image of a target area in a current second intermediate video frame and images of the target area in a preset number of adjacent second intermediate video frames, where the target area is an area corresponding to a preset neighborhood of a non-mask area of the intermediate mask image;
S502, inputting the optical flow information, the image of the target area of the current second intermediate video frame, and the images of the target area of the adjacent second intermediate video frames into an encoder of the preset video repair model to extract a first feature map;
S503, extracting a feature from the current second intermediate video frame to obtain a second feature map;
S504, fusing the first feature map with the second feature map to obtain a fused feature map; and
S505, inputting the fused feature map into a decoder of the preset video repair model to generate the target video frame.

In the present embodiment, S501-S502 are the same as S301-S302 in the above embodiment, that is, the optical flow information, the image of the target area of the current second intermediate video frame and the images of the target area of the adjacent second intermediate video frames are input into the encoder of the Transformer model to extract the first feature map, and the first feature map is a local feature map. In S503, features are extracted separately from the current second intermediate video frame to obtain the second feature map, and the second feature map is a global feature map, where a separate feature extraction layer or the encoder of the Transformer model may be used to extract features from the current second intermediate video frame. Further, the first feature map and the second feature map may be fused to implement the fusion of local features and global features to obtain the fused feature map, and then the fused feature map is input into the decoder of the Transformer model to generate the repaired target video frame, which is the same as S303 in the above embodiment.

Through the video processing method of each of the above embodiments, accurate erasing of the target object in the to-be-processed video may be realized, rich original textures are preserved as much as possible by combining optical flow information in the preliminary repair process, the area of the area that needs to be repaired is also reduced, and then the video repair model is used for repair, thus improving the repair efficiency and the erasing quality of the target object.

It should be noted that, in the methods shown in Fig. 3 to Fig. 5, the preset video repair model is not limited to the Transformer model for illustration, and the processing process principles of other models are similar, and may be adjusted adaptively according to the specific model.

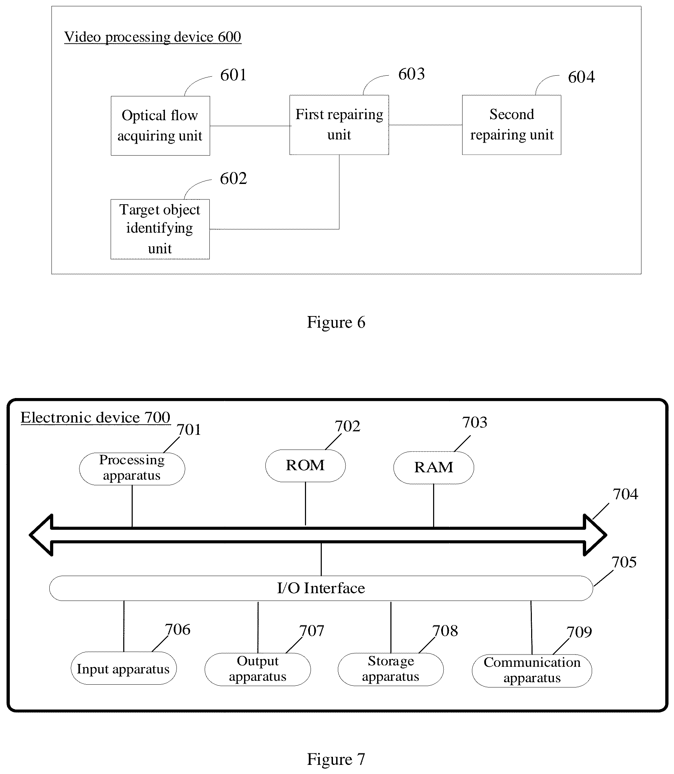

Corresponding to the video processing method of the above embodiments, Fig. 6 is a structural block diagram of a video processing device provided by an embodiment of the present disclosure. For convenience of explanation, only parts related to the embodiments of the present disclosure are shown. Referring to Fig. 6, the video processing device 600 includes: an optical flow acquiring unit 601, a target object identifying unit 602, a first repairing unit 603, and a second repairing unit 604.

The optical flow acquiring unit 601 is configured to acquire optical flow information of a to-be-processed video;
the target object identifying unit 602 is configured to determine a position of a target object in any initial video frame of the to-be-processed video, and perform target object segmentation on the initial video frame according to the position of the target object to obtain a first intermediate video frame with the target object removed and an initial mask image; where in the initial mask image, the target object is in a non-mask area, and the non-mask area is used to identify a to-be-repaired area of the first intermediate video frame;
the first repairing unit 603 is configured to determine a pixel value of at least one target pixel in the to-be-repaired area of the first intermediate video frame according to the optical flow information and adjacent video frames of the initial video frame, and fill the target pixel of the first intermediate video frame and a corresponding pixel of the initial mask image respectively according to the pixel value of the target pixel to obtain a second intermediate video frame and an intermediate mask image; and
the second repairing unit 604 is configured to invoke a preset video repair model to repair the second intermediate video frame according to the optical flow information, the second intermediate video frame, and the intermediate mask image to obtain a target video frame.

In one or more embodiments of the present disclosure, the first repairing unit 603, when filling the target pixel of the first intermediate video frame and the corresponding pixel of the initial mask image respectively according to the pixel value of the target pixel to obtain the second intermediate video frame and the intermediate mask image, is configured to:
fill the pixel value of the target pixel into the target pixel of the first intermediate video frame to obtain the second intermediate video frame; and
determine a corresponding pixel of the target pixel in the initial mask image, and perform masking processing on the corresponding pixel in the initial mask image to obtain the intermediate mask image.

In one or more embodiments of the present disclosure, the first repairing unit 603, when determining the pixel value of at least one target pixel in the to-be-repaired area of the first intermediate video frame according to the optical flow information and the adjacent video frames of the initial video frame, is configured to:
determine, according to the optical flow information, corresponding pixels of the at least one target pixel in the to-be-repaired area of the first intermediate video frame in the adjacent video frames, and determine the pixel value of the target pixel according to the corresponding pixels in the adjacent video frames.

In one or more embodiments of the present disclosure, the first repairing unit 603, when determining the pixel value of the target pixel according to the corresponding pixels in the adjacent video frames, is configured to:
determine a pixel value with a largest number of occurrences among pixel values of the corresponding pixels in the adjacent video frames, and determine the pixel value with the largest number of occurrences as the pixel value of the target pixel; or
perform weighted averaging on the pixel values of the corresponding pixels in the adjacent video frames, and determine a weighted average result as the pixel value of the target pixel.

In one or more embodiments of the present disclosure, the first repairing unit 603, when filling the target pixel of the first intermediate video frame and the corresponding pixel of the initial mask image respectively according to the pixel value of the target pixel to obtain the second intermediate video frame and the intermediate mask image, is configured to:
determine a confidence of the pixel value of the target pixel, and if the confidence is higher than a preset confidence threshold, fill the target pixel of the first intermediate video frame and the corresponding pixel of the initial mask image respectively according to the pixel value of the target pixel to obtain the second intermediate video frame and the intermediate mask image.

In one or more embodiments of the present disclosure, the second repairing unit 604, when invoking the preset video repair model to repair the second intermediate video frame according to the optical flow information, the second intermediate video frame, and the intermediate mask image to obtain the target video frame, is configured to:
invoke the preset video repair model to repair a to-be-repaired area of the second intermediate video frame according to the optical flow information, the second intermediate video frame, and the intermediate mask image to obtain the target video frame, where the to-be-repaired area of the second intermediate video frame is an area corresponding to a non-mask area of the intermediate mask image in the second intermediate video frame.

In one or more embodiments of the present disclosure, the second repairing unit 604, when invoking the preset video repair model to repair the to-be-repaired area of the second intermediate video frame according to the optical flow information, the second intermediate video frame, and the intermediate mask image to obtain the target video frame, is configured to:
acquire an image of a target area in a current second intermediate video frame and images of the target area in a preset number of adjacent second intermediate video frames, where the target area is an area corresponding to a preset neighborhood of a non-mask area of the intermediate mask image;
input the optical flow information, the image of the target area of the current second intermediate video frame, and the images of the target area of the adjacent second intermediate video frames into an encoder of the preset video repair model to extract a feature map; and
input the feature map into a decoder of the preset video repair model to generate the target video frame.

In one or more embodiments of the present disclosure, the second repairing unit 604, when invoking the preset video repair model to repair the to-be-repaired area of the second intermediate video frame according to the optical flow information, the second intermediate video frame, and the intermediate mask image to obtain the target video frame, is configured to:
acquire an image of a target area in a current second intermediate video frame and images of the target area in a preset number of adjacent second intermediate video frames, where the target area is an area corresponding to a preset neighborhood of a non-mask area of the intermediate mask image;
downsize the current second intermediate video frame to a size of the target area to obtain a downsized current second intermediate video frame;
input the optical flow information, the downsized current second intermediate video frame, the image of the target area of the current second intermediate video frame, and the images of the target area of the adjacent second intermediate video frames into an encoder of the preset video repair model to extract a feature map; and
input the feature map into a decoder of the preset video repair model to generate the target video frame.

In one or more embodiments of the present disclosure, the second repairing unit 604, when invoking the preset video repair model to repair the to-be-repaired area of the second intermediate video frame according to the optical flow information, the second intermediate video frame, and the intermediate mask image to obtain the target video frame, is configured to:
acquire an image of a target area in a current second intermediate video frame and images of the target area in a preset number of adjacent second intermediate video frames, where the target area is an area corresponding to a preset neighborhood of a non-mask area of the intermediate mask image;
input the optical flow information, the image of the target area of the current second intermediate video frame, and the images of the target area of the adjacent second intermediate video frames into an encoder of the preset video repair model to extract a first feature map;
extract a feature from the current second intermediate video frame to obtain a second feature map;
fuse the first feature map with the second feature map to obtain a fused feature map; and
input the fused feature map into a decoder of the preset video repair model to generate the target video frame.

In one or more embodiments of the present disclosure, the optical flow acquiring unit 601, when acquiring the optical flow information of the to-be-processed video, is configured to:
acquire initial optical flow information by invoking a preset optical flow model according to the to-be-processed video; and
complete the initial optical flow information by invoking a preset optical flow completion model according to the to-be-processed video and the initial optical flow information to obtain the optical flow information of the to-be-processed video.

In one or more embodiments of the present disclosure, the target object identifying unit 602, when determining the position of the target object in any initial video frame of the to-be-processed video, is configured to:
identify all target objects in any initial video frame of the to-be-processed video; and
select a target object that meets a preset selection condition from all target objects in the initial video frame, and determine a position of the target object that meets the preset selection condition.

In one or more embodiments of the present disclosure, the target object is a subtitle.

The device provided in the present embodiment may be used to implement the technical solutions of the above method embodiments, and the implementation principle and technical effect thereof are similar, which will not be repeated here in the present embodiment.

In order to implement the above embodiments, an embodiment of the present disclosure further provides an electronic device.

Referring to Fig. 7, Fig. 7 shows a schematic structural diagram of an electronic device 700 suitable for implementing an embodiment of the present disclosure, and the electronic device 700 may be a terminal device or a server. The terminal device may include, but is not limited to, a mobile terminal such as a mobile phone, a notebook computer, a digital broadcast receiver, a personal digital assistant (abbreviated as PDA), a tablet computer, a portable media player (abbreviated as PMP), a vehicle-mounted terminal (such as a vehicle-mounted navigation terminal), etc., and a fixed terminal such as a digital TV, a desktop computer, etc. The electronic device shown in Fig. 7 is only an example, and should not bring any limitation to the function and use range of the embodiments of the present disclosure.

As shown in Fig. 7, the electronic device 700 may include a processing apparatus (such as a central processing unit, a graphics processor and the like) 701, which may perform various appropriate actions and processing according to a program stored in a read-only memory (abbreviated as ROM) 702 or a program loaded from a storage apparatus 708 into a random access memory (abbreviated as RAM) 703. In the RAM 703, various programs and data required for operations of the electronic device 700 are also stored. The processing apparatus 701, the ROM 702 and the RAM 703 are connected to each other through a bus 704. An input/output (I/O) interface 705 is also connected to the bus 704.

Usually, the following apparatus may be connected to the I/O interface 705: an input apparatus 706 including, for example, a touch screen, a touchpad, a keyboard, a mouse, a camera, a microphone, an accelerometer, a gyroscope and the like; an output apparatus 707 including, for example, a liquid crystal display (abbreviated as LCD), a speaker, a vibrator and the like; the storage apparatus 708 including, for example, a magnetic tape, a hard disk and the like; and a communication apparatus 709. The communication apparatus 709 may allow the electronic device 700 to perform wireless or wired communication with other devices to exchange data. Although Fig. 7 shows the electronic device 700 with various apparatuses, it should be understood that not all the apparatuses shown here need to be implemented or provided. More or fewer apparatuses may be implemented or provided alternatively.

In particular, according to an embodiment of the present disclosure, the process described above with reference to the flowchart may be implemented as a computer software program. For example, an embodiment of the present disclosure includes a computer program product, which includes a computer program carried on a computer-readable medium, where the computer program contains program codes for executing the method shown in the flowchart. In such an embodiment, the computer program may be downloaded and installed from a network through the communication apparatus 709, or installed from the storage apparatus 708, or installed from the ROM 702. When the computer program is executed by the processing apparatus 701, the above-mentioned functions defined in the method of the embodiment of the present disclosure are executed.

It should be noted that the above computer-readable medium in the present disclosure may be a computer-readable signal medium, a computer-readable storage medium or any combination thereof. The computer-readable storage medium may be, for example, but not limited to, an electrical, magnetic, optical, electromagnetic, infrared or semiconductor system, apparatus or device, or any combination of the above. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, and the program may be used by or in combination with an instruction execution system, apparatus or device. In the present disclosure, a computer-readable signal medium may include a data signal propagated in a baseband or as a part of a carrier wave, and computer-readable program codes are carried in the data signal. This propagated data signal may take many forms, including but not limited to, an electromagnetic signal, an optical signal, or any suitable combination of the above. The computer-readable signal medium may also be any computer-readable medium other than the computer-readable storage medium, and the computer-readable signal medium may send, propagate or transmit the program used by or in combination with the instruction execution system, apparatus or device. The program codes contained on the computer-readable medium may be transmitted by any suitable medium, including but not limited to: a wire, an optical cable, a radio frequency (RF), etc., or any suitable combination of the above.

The above computer-readable medium may be included in the above electronic device, or may exist alone without being assembled into the electronic device.

The above computer-readable medium carries one or more programs, and the one or more programs, when executed by the electronic device, cause the electronic device to execute the method shown in the above embodiments.

The computer program codes used to perform the operations of the present disclosure may be written in one or more programming languages or a combination thereof, where the above programming languages include object-oriented programming languages such as Java, Smalltalk, C++, and also include conventional procedural programming languages such as "C" language or similar programming languages. The program codes may be executed entirely on a computer of a user, partly executed on a computer of a user, executed as an independent software package, partly executed on a computer of a user and partly executed on a remote computer, or entirely executed on a remote computer or a server. In the case of involving the remote computer, the remote computer may be connected to a computer of a user through any kind of network, including a local area network (abbreviated as LAN) or a wide area network (abbreviated as WAN), or it may be connected to an external computer (for example, connected by using Internet provided by an Internet service provider).

The flowcharts and block diagrams in the drawings illustrate the possibly implemented architectures, functions and operations of the system, the method and the computer program product according to various embodiments of the present disclosure. In this regard, each block in the flowchart or block diagram may represent a module, program segment, or a part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or hardware. The name of a unit does not constitute a limitation on the unit itself under certain circumstances, for example, the first acquiring unit may also be described as "a unit for acquiring at least two internet protocol addresses".

The functions described above herein may be performed at least partly by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD) and the like.

In a first aspect, according to one or more embodiments of the present disclosure, a video processing method is provided, including:
acquiring optical flow information of a to-be-processed video;
determining a position of a target object in any initial video frame of the to-be-processed video, and performing target object segmentation on the initial video frame according to the position of the target object to obtain a first intermediate video frame with the target object removed and an initial mask image; where in the initial mask image, the target object is in a non-mask area, and the non-mask area is used to identify a to-be-repaired area of the first intermediate video frame;
[**0147]** determining a pixel value of at least one target pixel in the to-be-repaired area of the first intermediate video frame according to the optical flow information and adjacent video frames of the initial video frame, and filling the target pixel of the first intermediate video frame and a corresponding pixel of the initial mask image respectively according to the pixel value of the target pixel to obtain a second intermediate video frame and an intermediate mask image; and
**[0148]** invoking a preset video repair model to repair the second intermediate video frame according to the optical flow information, the second intermediate video frame, and the intermediate mask image to obtain a target video frame.

[**0149]** According to one or more embodiments of the present disclosure, the filling the target pixel of the first intermediate video frame and the corresponding pixel of the initial mask image respectively according to the pixel value of the target pixel to obtain the second intermediate video frame and the intermediate mask image includes:
filling the pixel value of the target pixel into the target pixel of the first intermediate video frame to obtain the second intermediate video frame; and
determining a corresponding pixel of the target pixel in the initial mask image, and performing masking processing on the corresponding pixel in the initial mask image to obtain the intermediate mask image.

According to one or more embodiments of the present disclosure, the determining the pixel value of at least one target pixel in the to-be-repaired area of the first intermediate video frame according to the optical flow information and the adjacent video frames of the initial video frame includes:
determining, according to the optical flow information, corresponding pixels of the at least one target pixel in the to-be-repaired area of the first intermediate video frame in the adjacent video frames, and determining the pixel value of the target pixel according to the corresponding pixels in the adjacent video frames.

According to one or more embodiments of the present disclosure, the determining the pixel value of the target pixel according to the corresponding pixels in the adjacent video frames includes:
determining a pixel value with a largest number of occurrences among pixel values of the corresponding pixels in the adjacent video frames, and determining the pixel value with the largest number of occurrences as the pixel value of the target pixel; or
performing weighted averaging on the pixel values of the corresponding pixels in the adjacent video frames, and determining a weighted average result as the pixel value of the target pixel.

According to one or more embodiments of the present disclosure, the filling the target pixel of the first intermediate video frame and the corresponding pixel of the initial mask image respectively according to the pixel value of the target pixel to obtain the second intermediate video frame and the intermediate mask image includes:
determining a confidence of the pixel value of the target pixel, and if the confidence is higher than a preset confidence threshold, filling the target pixel of the first intermediate video frame and the corresponding pixel of the initial mask image respectively according to the pixel value of the target pixel to obtain the second intermediate video frame and the intermediate mask image.

According to one or more embodiments of the present disclosure, the invoking the preset video repair model to repair the second intermediate video frame according to the optical flow information, the second intermediate video frame, and the intermediate mask image to obtain the target video frame includes:
invoking the preset video repair model to repair a to-be-repaired area of the second intermediate video frame according to the optical flow information, the second intermediate video frame, and the intermediate mask image to obtain the target video frame, where the to-be-repaired area of the second intermediate video frame is an area corresponding to a non-mask area of the intermediate mask image in the second intermediate video frame.

According to one or more embodiments of the present disclosure, the invoking the preset video repair model to repair the to-be-repaired area of the second intermediate video frame according to the optical flow information, the second intermediate video frame, and the intermediate mask image to obtain the target video frame includes:
acquiring an image of a target area in a current second intermediate video frame and images of the target area in a preset number of adjacent second intermediate video frames, where the target area is an area corresponding to a preset neighborhood of a non-mask area of the intermediate mask image;
inputting the optical flow information, the image of the target area of the current second intermediate video frame, and the images of the target area of the adjacent second intermediate video frames into an encoder of the preset video repair model to extract a feature map; and
inputting the feature map into a decoder of the preset video repair model to generate the target video frame.

According to one or more embodiments of the present disclosure, the invoking the preset video repair model to repair the to-be-repaired area of the second intermediate video frame according to the optical flow information, the second intermediate video frame, and the intermediate mask image to obtain the target video frame includes:
acquiring an image of a target area in a current second intermediate video frame and images of the target area in a preset number of adjacent second intermediate video frames, where the target area is an area corresponding to a preset neighborhood of a non-mask area of the intermediate mask image;
downsizing the current second intermediate video frame to a size of the target area to obtain a downsized current second intermediate video frame;
inputting the optical flow information, the downsized current second intermediate video frame, the image of the target area of the current second intermediate video frame, and the images of the target area of the adjacent second intermediate video frames into an encoder of the preset video repair model to extract a feature map; and
inputting the feature map into a decoder of the preset video repair model to generate the target video frame.

According to one or more embodiments of the present disclosure, the invoking the preset video repair model to repair the to-be-repaired area of the second intermediate video frame according to the optical flow information, the second intermediate video frame, and the intermediate mask image to obtain the target video frame includes:
acquiring an image of a target area in a current second intermediate video frame and images of the target area in a preset number of adjacent second intermediate video frames, where the target area is an area corresponding to a preset neighborhood of a non-mask area of the intermediate mask image;
inputting the optical flow information, the image of the target area of the current second intermediate video frame, and the images of the target area of the adjacent second intermediate video frames into an encoder of the preset video repair model to extract a first feature map;
extracting a feature from the current second intermediate video frame to obtain a second feature map;
fusing the first feature map with the second feature map to obtain a fused feature map; and
inputting the fused feature map into a decoder of the preset video repair model to generate the target video frame.

According to one or more embodiments of the present disclosure, the acquiring the optical flow information of the to-be-processed video includes:
acquiring initial optical flow information by invoking a preset optical flow model according to the to-be-processed video; and
completing the initial optical flow information by invoking a preset optical flow completion model according to the to-be-processed video and the initial optical flow information to obtain the optical flow information of the to-be-processed video.

According to one or more embodiments of the present disclosure, the determining the position of the target object in any initial video frame of the to-be-processed video includes:
identifying all target objects in any initial video frame of the to-be-processed video; and
selecting a target object that satisfies a preset selection condition from all the target objects in the initial video frame, and determining a position of the target object that satisfies the preset selection condition.

According to one or more embodiments of the present disclosure, the target object is a subtitle.

In a second aspect, according to one or more embodiments of the present disclosure, a video processing device is provided, including:
an optical flow acquiring unit, configured to acquire optical flow information of a to-be-processed video;
a target object identifying unit, configured to determine a position of a target object in any initial video frame of the to-be-processed video, and perform target object segmentation on the initial video frame according to the position of the target object to obtain a first intermediate video frame with the target object removed and an initial mask image; where in the initial mask image, the target object is in a non-mask area, and the non-mask area is used to identify a to-be-repaired area of the first intermediate video frame;
a first repairing unit, configured to determine a pixel value of at least one target pixel in the to-be-repaired area of the first intermediate video frame according to the optical flow information and adjacent video frames of the initial video frame, and fill the target pixel of the first intermediate video frame and a corresponding pixel of the initial mask image respectively according to the pixel value of the target pixel to obtain a second intermediate video frame and an intermediate mask image; and
a second repairing unit, configured to invoke a preset video repair model to repair the second intermediate video frame according to the optical flow information, the second intermediate video frame, and the intermediate mask image to obtain a target video frame.

According to one or more embodiments of the present disclosure, the first repairing unit, when filling the target pixel of the first intermediate video frame and the corresponding pixel of the initial mask image respectively according to the pixel value of the target pixel to obtain the second intermediate video frame and the intermediate mask image, is configured to:
fill the pixel value of the target pixel into the target pixel of the first intermediate video frame to obtain the second intermediate video frame; and
determine a corresponding pixel of the target pixel in the initial mask image, and perform masking processing on the corresponding pixel in the initial mask image to obtain the intermediate mask image.

According to one or more embodiments of the present disclosure, the first repairing unit, when determining the pixel value of at least one target pixel in the to-be-repaired area of the first intermediate video frame according to the optical flow information and the adjacent video frames of the initial video frame, is configured to:
determine, according to the optical flow information, corresponding pixels of the at least one target pixel in the to-be-repaired area of the first intermediate video frame in the adjacent video frames, and determine the pixel value of the target pixel according to the corresponding pixels in the adjacent video frames.

According to one or more embodiments of the present disclosure, the first repairing unit, when determining the pixel value of the target pixel according to the corresponding pixels in the adjacent video frames, is configured to:
determine a pixel value with a largest number of occurrences among pixel values of the corresponding pixels in the adjacent video frames, and determine the pixel value with the largest number of occurrences as the pixel value of the target pixel; or
perform weighted averaging on the pixel values of the corresponding pixels in the adjacent video frames, and determine a weighted average result as the pixel value of the target pixel.

According to one or more embodiments of the present disclosure, the first repairing unit, when filling the target pixel of the first intermediate video frame and the corresponding pixel of the initial mask image respectively according to the pixel value of the target pixel to obtain the second intermediate video frame and the intermediate mask image, is configured to:
determine a confidence of the pixel value of the target pixel, and if the confidence is higher than a preset confidence threshold, fill the target pixel of the first intermediate video frame and the corresponding pixel of the initial mask image respectively according to the pixel value of the target pixel to obtain the second intermediate video frame and the intermediate mask image.

According to one or more embodiments of the present disclosure, the second repairing unit, when invoking the preset video repair model to repair the second intermediate video frame according to the optical flow information, the second intermediate video frame, and the intermediate mask image to obtain the target video frame, is configured to:
invoke the preset video repair model to repair a to-be-repaired area of the second intermediate video frame according to the optical flow information, the second intermediate video frame, and the intermediate mask image to obtain the target video frame, where the to-be-repaired area of the second intermediate video frame is an area corresponding to a non-mask area of the intermediate mask image in the second intermediate video frame.

According to one or more embodiments of the present disclosure, the second repairing unit, when invoking the preset video repair model to repair the to-be-repaired area of the second intermediate video frame according to the optical flow information, the second intermediate video frame, and the intermediate mask image to obtain the target video frame, is configured to:
acquire an image of a target area in a current second intermediate video frame and images of the target area in a preset number of adjacent second intermediate video frames, where the target area is an area corresponding to a preset neighborhood of a non-mask area of the intermediate mask image;
input the optical flow information, the image of the target area of the current second intermediate video frame, and the images of the target area of the adjacent second intermediate video frames into an encoder of the preset video repair model to extract a feature map; and
input the feature map into a decoder of the preset video repair model to generate the target video frame.

According to one or more embodiments of the present disclosure, the second repairing unit, when invoking the preset video repair model to repair the to-be-repaired area of the second intermediate video frame according to the optical flow information, the second intermediate video frame, and the intermediate mask image to obtain the target video frame, is configured to:
acquire an image of a target area in a current second intermediate video frame and images of the target area in a preset number of adjacent second intermediate video frames, where the target area is an area corresponding to a preset neighborhood of a non-mask area of the intermediate mask image;
downsize the current second intermediate video frame to a size of the target area to obtain a downsized current second intermediate video frame;
input the optical flow information, the downsized current second intermediate video frame, the image of the target area of the current second intermediate video frame, and the images of the target area of the adjacent second intermediate video frames into an encoder of the preset video repair model to extract a feature map; and
input the feature map into a decoder of the preset video repair model to generate the target video frame.

According to one or more embodiments of the present disclosure, the second repairing unit, when invoking the preset video repair model to repair the to-be-repaired area of the second intermediate video frame according to the optical flow information, the second intermediate video frame, and the intermediate mask image to obtain the target video frame, is configured to:
acquire an image of a target area in a current second intermediate video frame and images of the target area in a preset number of adjacent second intermediate video frames, where the target area is an area corresponding to a preset neighborhood of a non-mask area of the intermediate mask image;
input the optical flow information, the image of the target area of the current second intermediate video frame, and the images of the target area of the adjacent second intermediate video frames into an encoder of the preset video repair model to extract a first feature map;
extract a feature from the current second intermediate video frame to obtain a second feature map;
fuse the first feature map with the second feature map to obtain a fused feature map; and
input the fused feature map into a decoder of the preset video repair model to generate the target video frame.

According to one or more embodiments of the present disclosure, the optical flow acquiring unit, when acquiring the optical flow information of the to-be-processed video, is configured to:
acquire initial optical flow information by invoking a preset optical flow model according to the to-be-processed video; and
completing the initial optical flow information by invoking a preset optical flow completion model according to the to-be-processed video and the initial optical flow information to obtain the optical flow information of the to-be-processed video.

According to one or more embodiments of the present disclosure, the target object identifying unit, when determining the position of the target object in any initial video frame of the to-be-processed video, is configured to:
identify all target objects in any initial video frame of the to-be-processed video; and
select a target object that satisfies a preset selection condition from all the target objects in the initial video frame, and determine a position of the target object that satisfies the preset selection condition.

According to one or more embodiments of the present disclosure, the target object is a subtitle.

In a third aspect, according to one or more embodiments of the present disclosure, an electronic device is provided, including: at least one processor and a memory;
the memory stores computer-executable instructions; and
the at least one processor executes the computer-executable instructions stored in the memory to enable the at least one processor to execute the video processing method according to the above first aspect and various possible designs of the first aspect.

In a fourth aspect, according to one or more embodiments of the present disclosure, a computer-readable storage medium is provided, where computer-executable instructions are stored in the computer-readable storage medium, and when the computer-executable instructions are executed by a processor, the video processing method according to the above first aspect and various possible designs of the first aspect is implemented.

In a fifth aspect, according to one or more embodiments of the present disclosure, a computer program product is provided, including a computer program, and the computer program, when executed by a processor, implements the video processing method according to the above first aspect and various possible designs of the first aspect.

The above description is only preferred embodiments of the present disclosure and an explanation of the applied technical principles. Those skilled in the art should understand that the disclosed scope involved in the present disclosure is not limited to the technical solutions formed by the specific combination of the above technical features, but also covers other technical solutions formed by any combination of the above technical features or their equivalent features without departing from the above disclosed concept. For example, a technical solution formed by replacing the above features with technical features with similar functions disclosed in the present disclosure (but not limited to).

In addition, although the operations are depicted in a specific order, this should not be understood as requiring the operations to be performed in the specific order shown or in a sequential order. Under certain circumstances, multitasking and parallel processing may be advantageous. Similarly, although the above discussion contains several specific implementation details, these should not be interpreted as limiting the scope of the present disclosure. Some features described in the context of separate embodiments may also be implemented in combination in a single embodiment. On the contrary, various features described in the context of a single embodiment may also be implemented in multiple embodiments individually or in any suitable subcombination.

Although the subject matter has been described in a language specific to structural features and/or logical actions of the method, it should be understood that the subject matter defined in the appended claims is not necessarily limited to the specific features or actions described above. On the contrary, the specific features and actions described above are only exemplary forms of implementing the claims.

## Claims

1. A video processing method, comprising:
acquiring (S201) optical flow information of a to-be-processed video;
determining (S202) a position of a target object in any initial video frame of the to-be-processed video, and performing target object segmentation on the initial video frame according to the position of the target object to obtain a first intermediate video frame with the target object removed and an initial mask image; wherein in the initial mask image, the target object is in a non-mask area, and the non-mask area is configured to identify a to-be-repaired area of the first intermediate video frame;
determining (S203) a pixel value of at least one target pixel in the to-be-repaired area of the first intermediate video frame according to the optical flow information and adjacent video frames of the initial video frame, and filling the target pixel of the first intermediate video frame and a corresponding pixel of the initial mask image respectively according to the pixel value of the target pixel to obtain a second intermediate video frame and an intermediate mask image; and
invoking (S204) a preset video repair model to repair the second intermediate video frame according to the optical flow information, the second intermediate video frame, and the intermediate mask image to obtain a target video frame.

2. The method of claim 1, wherein the filling the target pixel of the first intermediate video frame and the corresponding pixel of the initial mask image respectively according to the pixel value of the target pixel to obtain the second intermediate video frame and the intermediate mask image comprises:
filling the pixel value of the target pixel into the target pixel of the first intermediate video frame to obtain the second intermediate video frame; and
determining a corresponding pixel of the target pixel in the initial mask image, and performing masking processing on the corresponding pixel in the initial mask image to obtain the intermediate mask image.

3. The method of claim 1, wherein the determining the pixel value of at least one target pixel in the to-be-repaired area of the first intermediate video frame according to the optical flow information and the adjacent video frames of the initial video frame comprises:
determining, according to the optical flow information, corresponding pixels of the at least one target pixel in the to-be-repaired area of the first intermediate video frame in the adjacent video frames, and determining the pixel value of the target pixel according to the corresponding pixels in the adjacent video frames.

4. The method of claim 3, wherein the determining the pixel value of the target pixel according to the corresponding pixels in the adjacent video frames comprises:
determining the pixel value with a largest number of occurrences among the pixel values of the corresponding pixels in the adjacent video frames, and determining the pixel value with the largest number of occurrences as the pixel value of the target pixel; or
performing weighted averaging on the pixel values of the corresponding pixels in the adjacent video frames, and determining a weighted average result as the pixel value of the target pixel.

5. The method of any one of claims 1-4, wherein the filling the target pixel of the first intermediate video frame and the corresponding pixel of the initial mask image respectively according to the pixel value of the target pixel to obtain the second intermediate video frame and the intermediate mask image comprises:
determining a confidence of the pixel value of the target pixel, and if the confidence is higher than a preset confidence threshold, filling the target pixel of the first intermediate video frame and the corresponding pixel of the initial mask image respectively according to the pixel value of the target pixel to obtain the second intermediate video frame and the intermediate mask image.

6. The method of any one of claims 1-4, wherein the invoking the preset video repair model to repair the second intermediate video frame according to the optical flow information, the second intermediate video frame, and the intermediate mask image to obtain the target video frame comprises:
invoking the preset video repair model to repair a to-be-repaired area of the second intermediate video frame according to the optical flow information, the second intermediate video frame, and the intermediate mask image to obtain the target video frame, wherein the to-be-repaired area of the second intermediate video frame is an area corresponding to the non-mask area of the intermediate mask image in the second intermediate video frame.

7. The method of claim 6, wherein the invoking the preset video repair model to repair the to-be-repaired area of the second intermediate video frame according to the optical flow information, the second intermediate video frame, and the intermediate mask image to obtain the target video frame comprises:
acquiring an image of a target area in a current second intermediate video frame and images of the target area in a preset number of adjacent second intermediate video frames, wherein the target area is an area corresponding to a preset neighborhood of the non-mask area of the intermediate mask image;
inputting the optical flow information, the image of the target area of the current second intermediate video frame, and the images of the target area of the adjacent second intermediate video frames into an encoder of the preset video repair model to extract a feature map; and
inputting the feature map into a decoder of the preset video repair model to generate the target video frame.

8. The method of claim 6, wherein the invoking the preset video repair model to repair the to-be-repaired area of the second intermediate video frame according to the optical flow information, the second intermediate video frame, and the intermediate mask image to obtain the target video frame comprises:
acquiring an image of a target area in a current second intermediate video frame and images of the target area in a preset number of adjacent second intermediate video frames, wherein the target area is an area corresponding to a preset neighborhood of the non-mask area of the intermediate mask image;
downsizing the current second intermediate video frame to a size of the target area to obtain a downsized current second intermediate video frame;
inputting the optical flow information, the downsized current second intermediate video frame, the image of the target area of the current second intermediate video frame, and the images of the target area of the adjacent second intermediate video frames into an encoder of the preset video repair model to extract a feature map; and
inputting the feature map into a decoder of the preset video repair model to generate the target video frame.

9. The method of claim 6, wherein the invoking the preset video repair model to repair the to-be-repaired area of the second intermediate video frame according to the optical flow information, the second intermediate video frame, and the intermediate mask image to obtain the target video frame comprises:
acquiring an image of a target area in a current second intermediate video frame and images of the target area in a preset number of adjacent second intermediate video frames, wherein the target area is an area corresponding to a preset neighborhood of the non-mask area of the intermediate mask image;
inputting the optical flow information, the image of the target area of the current second intermediate video frame, and the images of the target areas of the adjacent second intermediate video frames into an encoder of the preset video repair model to extract a first feature map;
extracting features from the current second intermediate video frame to obtain a second feature map;
fusing the first feature map and the second feature map to obtain a fused feature map; and
inputting the fused feature map into a decoder of the preset video repair model to generate the target video frame.

10. The method of claim 1, wherein the acquiring the optical flow information of the to-be-processed video comprises:
invoking a preset optical flow model to acquire initial optical flow information according to the to-be-processed video; and
invoking a preset optical flow completion model to complete the initial optical flow information according to the to-be-processed video and the initial optical flow information to obtain the optical flow information of the to-be-processed video.

11. The method of claim 1, wherein the determining the position of the target object in any initial video frame of the to-be-processed video comprises:
identifying all target objects in any initial video frame of the to-be-processed video; and
selecting the target object that satisfies a preset selection condition from all the target objects in the initial video frame, and determining the position of the target object that satisfies the preset selection condition.

12. The method of claim 1, wherein the target object is a subtitle.

13. An electronic device, comprising: one or more processors and one or more memories;
the one or more memories store computer-executable instructions; and
the one or more processors execute the computer-executable instructions stored in the one or more memories to enable the one or more processors to execute the method of any one of claims 1-12.

14. A computer-readable storage medium, wherein computer-executable instructions are stored in the computer-readable storage medium, and the computer-executable instructions, when executed by one or more processors, implement the method of any one of claims 1-12.

15. A computer program product, comprising a computer program, wherein the computer program, when executed by one or more processors, implements the method of any one of claims 1-12.
